# EUROPÄISCHE PATENTSCHRIFT

(11) **EP 1 476 935 B1**
(45) Veröffentlichungstag und Bekanntmachung des Hinweises auf die Patenterteilung: **23.07.2008**
(21) Anmeldenummer: 03706550.5
(22) Anmeldetag: 21.02.2003
(51) Int. Cl.: H02K 5/14, H01R 39/39

(54) **HALTERUNG FÜR EINE KOHLEBÜRSTE**
HOLDER FOR A CARBON BRUSH
DISPOSITIF DE FIXATION POUR UN BALAI DE CHARBON

(30) Priorität: 21.02.2002 DE 10207406
(43) Veröffentlichungstag der Anmeldung: 17.11.2004
(73) Patentinhaber: Schunk Modultechnik GmbH, 27777 Ganderkesee (DE)
(72) Erfinder: BUSSE, Holger, 37115 Duderstadt (DE); KÄSDORF, Wolfgang, 65326 Aarbergen (DE)
(74) Vertreter: Stoffregen, Hans-Herbert
(86) Internationale Anmeldenummer: PCT/EP2003/001792
(87) Internationale Veröffentlichungsnummer: WO 2003/071662

(56) Entgegenhaltungen:
- DE-A- 2 413 578
- DE-A- 19 962 705
- US-A- 4 238 703
- US-A- 4 431 933
- US-A- 4 494 029
- US-A- 5 175 464

## Beschreibung

Die Erfindung bezieht sich auf eine Halterung mit einer insbesondere an einem Kommutator oder einem Schleifring mit einer Stirnfläche anlegbaren Kohlebürste umfassend ein gebogenes Federelement mit einem gegebenenfalls U- oder L-förmig gebogenen Befestigungsabschnitt und einem die Kohlebürste aufnehmenden Trägerabschnitt der Halterung, wobei die Kohlebürste mit dem Trägerabschnitt stoffschlüssig verbunden ist.

Eine entsprechende Halterung ist der US-A-5 175 464 zu entnehmen. Dabei weist die Kohlebürste rückseitig einen quaderförmigen Vorsprung auf, der in eine entsprechend angepasste Aussparung der Halterung eingreift. Umfangsseitig entlang des Vorsprungs und im angrenzenden Randbereich der Rückseite wird die Kohlebürste mit der Halterung durch Löten verbunden.

Eine Erdungsbürste nach der US-A- 5 633 550 wird ebenfalls durch Löten mit einer als Blattfederpaket ausgebildeten Halterung verbunden. Die Bürste liegt rückseitig flächig an dem Blattfederpaket an.

Bei einer Kohlebürstenhalterung nach der US-A-4 431 933 weist die Kohlebürste einen rückseitig vorspringenden gegenüber dem Querschnitt der Kohlebürste verjüngten quaderförmigen Abschnitt auf, der zwischen frei geschnittenen und umgebogenen Halteabschnitten der Halterung festgeklemmt ist.

Eine Kohlebürstenhalterung ist z. B. der DE 199 62 705 A1 zu entnehmen. Um die Kohlebürste zu fixieren, weist der Trägerabschnitt eine Durchbrechung auf, die von der Kohlebürste durchsetzt wird, um diese durch Schneidklemmung zu fixieren. Da sich die Kohlebürste abschnittsweise rückseitig entlang des Trägerabschnittes erstreckt, ist eine Mindesteinbautiefe eforderlich, die insbesondere bei Kleinmotoren zu erheblichen Problemen führen kann. Durch die Schneidklemmverbindung ergibt sich zudem eine Kerbwirkung, die bei Schwingungen zu Problemen führen kann. Da der den Trägerabschnitt durchsetzende rückseitige Bereich der Kohlebürsten häufig einen geringeren Querschnitt als der einem Kommutator zugewandte Abschnitt aufweist, auf den die Kohlebürste zur Stromübertragung aufliegt, ist es herstellungsbedingt erforderlich, dass das Kohlebürstenmaterial in Längsrichtung der herzustellenden Kohlebürste gepresst wird.

Aus der US 4,638,201 ist eine Halterung für eine Kohlebürste bekannt. Die Halterung besteht aus einem L-förmigen Federelement, dessen einer Schenkel eine U-förmige Ausbuchtung aufweist, in der eine Kohlebürste festlegbar ist.

Bei einer Halterung nach der DE 199 62 705 A1 weist der Trägerabschnitt eine Durchbrechung auf, die von einer Kohlebürste durchsetzt wird, um diese durch Schneidklemmung zu fixieren. Da sich die Kohlebürste abschnittsweise rückseitig entlang des Trägerabschnittes erstreckt, ist eine Mindesteinbautiefe erforderlich, die insbesondere bei Kleinmotoren zu erheblichen Problemen fübren kann. Durch die Schneidklemmverbindung ergibt sich zudem eine Kerbwirkung, die bei Schwingungen zu Problemen führen kann. Da der den Trägerabschnitt durchsetzende rückseitige Bereich der Kuldebürsten häufig einen geringeren Querschnitt als der einem Kommutator zugewandte Abschnitt aufweist, auf den die Kohlebürste zur Stromübertragung aufliegt, ist es herstellungsbedingt erforderlich, dass das Kohlebüstenmaterial in Längsrichtung der herzustellenden Kohlebürste gepresst wird.

Ein Elektromotor für Kleingeräte nach der DE 24 13 578 A1 weist als Blattfedern ausgebildete Halterungen für Kohlebürsten auf, die jeweils einen prismatischen Fortsatz aufweisen, der durch Kerbwirkung in einem Ausschnitt der Blattfeder fixierbar ist.

Aus der DE 23 30 689 A1 ist ein Schleifbürstenhalter für kleine elektrische Maschinen bekannt. Dabei weist eine Kohlebürste einen einstückig mit der Kohlebürste ausgebildeten Ansatz geringeren Querschnitts auf, der eine Durchbrechung eines Federelementes durchsetzt und über federnde Lappen fixiert ist.

Der vorliegenden Erfindung liegt das Problem zu Grunde, eine Halterung der eingangs genannten Art insbesondere bestimmt für Kleinkohlebürsten für den Kraftfahrzeugbauderart weiterzubilden, dass ein sicheres Fixieren der Kohlebürste unter Vermeidung einer Kerbwirkung möglich ist, wobei der Einbauraum minimiert werden soll. Ferner soll sichergestellt sein, dass der Übergangswiderstand zwischen Kohlebürste und deren Halterung so gering wie möglich ist.

Erfindungsgemäß wird das Problem im Wesentlichen dadurch gelöst, dass der Trägerabschnitt der Halterung eine die Kohlebürste rückseitenflächig abstützende frei geschnittene Abstützfläche sowie aus dem Trägerabschnitt vorstehende, sich zumindest entlang zweier gegenüberliegender Seitenflächen der Kohlebürste sich erstreckende Führungsabschnitte aufweist, dass die Führungsabschnitte aus dem Trägerabschnitt der Halterung frei geschnittene und aus von dem Trägerabschnitt aufgespannter Ebene herausgebogene Abschnitte sind und dass die Kohlebürste mit der Abstützfläche durch Löten oder Schweißen oder mittels elektrisch leitendem Kleber stoffschlüssig verbunden ist. Dabei ist die Kohlebürste trägerabschnittsseitig insbesondere metallisiert wie vernickelt, verzinnt oder verkupfert.

Dabei kann der Führungsabschnitt auch Halteabschnitt für die Kohlebürste sein.

Erfindungsgemäß wird die Kohlebürste flächig auf dem Trägerabschnitt selbst abgestützt, so dass sich die Kohlebürste nicht über die Rückseite des Trägerabschnittes hinaus erstreckt. Folglich ist die Einbautiefe allein von der wirksamen mit einem Kommutator oder Schleifring wechselwirkenden Länge der Kohlebürste abhängig. Des Weiteren kann die Kohlebürste ohne Schneidklemmverbindung fixiert werden, so dass insbesondere bei Schwingungen sich nachteilig auswirkende Kerbwirkungen unterbunden werden.

Neben der innigen Verbindung erfolgt insbesondere durch die auf zumindest zwei Seitenflächen der Kohlebürste klemmend einwirkenden Führungsabschnitte eine zusätzliche Fixierung und damit Sicherung der Kohlebürste.

In Weiterbildung der Erfindung ist vorgesehen, dass sich insbesondere entlang jeder Seitenfläche ein aus dem Trägerabschnitt des Federelementes vorstehender. Führungsabschnitt erstreckt.

Vorzugsweise erstrecken sich entlang jeder Seitenfläche der Kohlebürste zwei Halte- bzw. Führungsabschnitte wie Fahnen. Dabei kann die Kohlebürste über die Halte- bzw. Führungsabschnitte klemmend fixiert sein.

Bei der Kohlebürste selbst kann es sich um eine Blockkohlebürste oder um eine Hammerkohlebürste handeln.

Da der Querschnitt der Kohlebürste aufgrund der erfindungsgemäß ausgebildeten Halterung und der damit verbundenen Fixierung der Kohlebürste im rückseitigen Bereich gleichbleibend ist, ergibt sich der Vorteil, dass zum Pressen des Kohlebürstenmaterials eine bevorzugte Richtung nicht einzuhalten ist. Somit ist es ohne Weiteres möglich, Kohlebürsten zu verwenden, die senkrecht oder parallel zur Längsachse der fertigen Kohlebürste gepresst sind.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: in perspektivischer Darstellung eine Draufsicht auf eine Kohlebürstenhalterung,
- Fig. 2: in perspektivischer Darstellung eine Seitenansicht der Kohlebürstenhalterung gemäß Fig. 1,
- Fig. 3: die Kohlebürstenhalterung nach Fig. 1 und 2 mit einer von dieser ausgehenden Kohlebürste,
- Fig. 4: die der Fig. 3 zu entnehmende Halterung mit Kohlebürste in abweichender perspektivischer Darstellung und
- Fig. 5: eine Prinzipdarstellung einer in einem Kleinmotor angeordneten Kohlebürste.

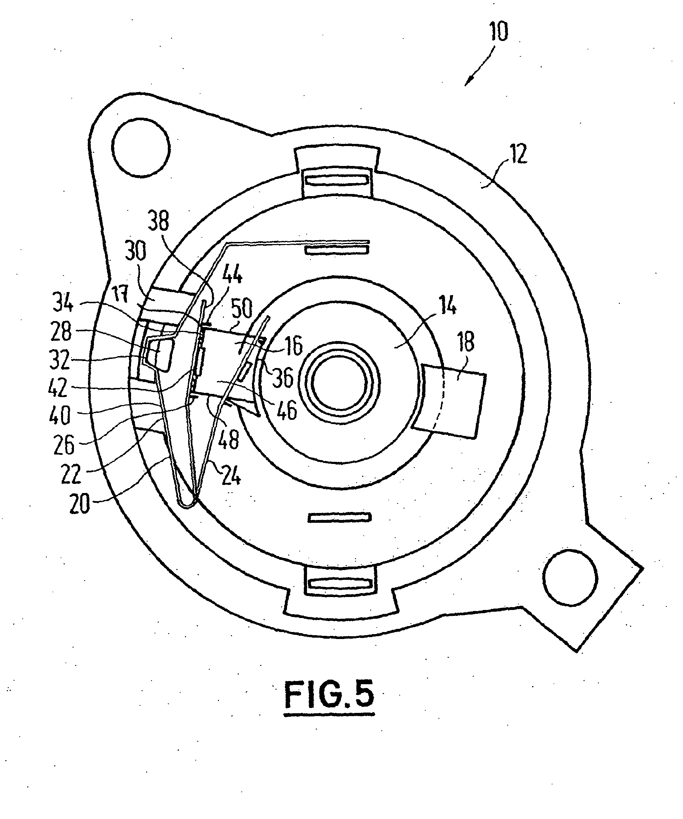

In Fig. 5 ist rein prinzipiell ein Kleinmotor 10 mit Motorgehäuse 12 und in diesem angeordnetem Elektromotor mit Kommutator 14 dargestellt, in dem zur Stromübertragung Kohlebürsten 16, 18 kraftbeaufschlagt anliegen. Hierzu gehen die Kohlebürsten 16 und 18 jeweils von einer nur im Zusammenhang mit der Kohlebürste 16 rein prinzipiell eingezeichneten Halterung 20 in Form einer von der Funktion her bekannten Blattfeder aus, die einen Befestigungsschenkel oder Befestigungsabschnitt 22 und einen die Kohlebürste 16 aufnehmenden Trägerabschnitt 24 umfasst. Der Befestigungsabschnitt 22 ist in bekannter Weise zwischen den Lagern und Widerlagern 26, 28 und 30 fixiert. Hierzu weist der Befestigungsabschnitt 22 einen im Schnitt U-förmig gebogenen Abschnitt 32 auf, der das Lager 28 umgibt, wohingegen die angrenzenden Abschnitte flächig an den Widerlagern 26 und 30 anliegen. Hierdurch erfährt die Halterung 20 eine eindeutige Fixierung, wobei aufgrund der Vorspannung des Trägerabschnittes 24 gegenüber dem Befestigungsabschnitt 22 die von dem Trägerabschnitt 24 ausgehende Kohlebürste 16 die erforderliche Kraftbeaufschlagung in Richtung des Kommutators 14 erfährt.

Die Kohlebürste 16 ist erfindungsgemäß mit dem Trägerabschnitt 24 innig verbunden wie verschweißt oder insbesondere verlötet. Hierzu kann der Bereich der Kohlebürste 16, der mit dem Trägerabschnitt 24 innig verbunden ist, verzinnt, vernickelt, verkupfert oder in sonstiger geeigneter Weise metallisiert sein.

Die Kohlebürste 16 liegt mit ihrer rückseitigen Fläche 34, die der an dem Kommutator 14 anliegenden Stirnfläche 36 gegenüberliegend verläuft, flächig auf der dem Kommutator zugewandten Seite 38 des Trägerabschnittes 24 auf und ist mit diesem innig verbunden. Der entsprechende metallisierte Bereich der Kohlebürste 16 ist mit dem Bezugszeichen 17 gekennzeichnet. Ferner erfolgt eine Fixierung über aus dem Trägerabschnitt 24 bzw. dessen eine Ebene aufspannenden Fläche 38 frei geschnittene und nach außen umgebogene Lappen oder Fahnen 40, 42, 44, wobei zumindest jeweils ein Lappen bzw. eine Fahne 40, 42, 44 entlang einer Seitenfläche 46, 48, 50 der Kohlebürste 16 verläuft. Hierdurch wird die Kohlebürste 16 im erforderlichen Umfang geführt gehalten und gegebenenfalls durch Klemmen fixiert, ohne dass eine mit einer Kerbwirkung einhergehende Schneidklemmung vorliegt, wie dies nach dem Stand der Technik der Fall ist.

Die Lappen oder Fahnen 40, 42, 44 können auch allein die Funktion einer Führung der Kohlebürste 16 ausüben, um diese eindeutig zu dem Trägerabschnitt 24 zu positionieren und sodann durch z.B. Löten oder Schweißen mit dem Trägerabschnitt 24 zu verbinden.

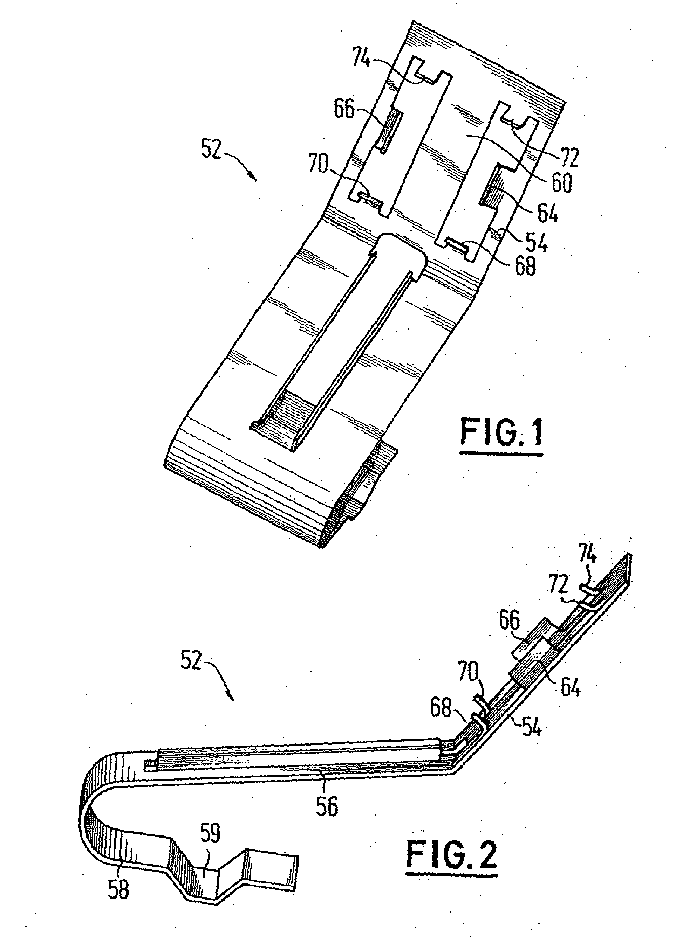

Den Fig. 1 bis 4 ist eine weitere, jedoch vom prinzipiellen Aufbau der Halterung 20 entsprechende bevorzugte Ausführungsform einer Halterung 52 zu entnehmen, die aus einem Trägerabschnitt 54 und einem U-förmig gebogenen Befestigungsabschnitt 56 besteht, wobei dessen freier Endschenkel 58 einen U-förmig gebogenen Abschnitt 59 aufweist, der zum Fixieren des Kohlebürstenhalters 52 ein Lager entsprechend dem Lager 28 gemäß Fig. 5 umgibt. Der U-förmige Abschnitt 59 weist vom Quer- oder Basisschenkel ausgehend zueinander divergierende Schenkel auf, wie die Fig. 2 verdeutlicht.

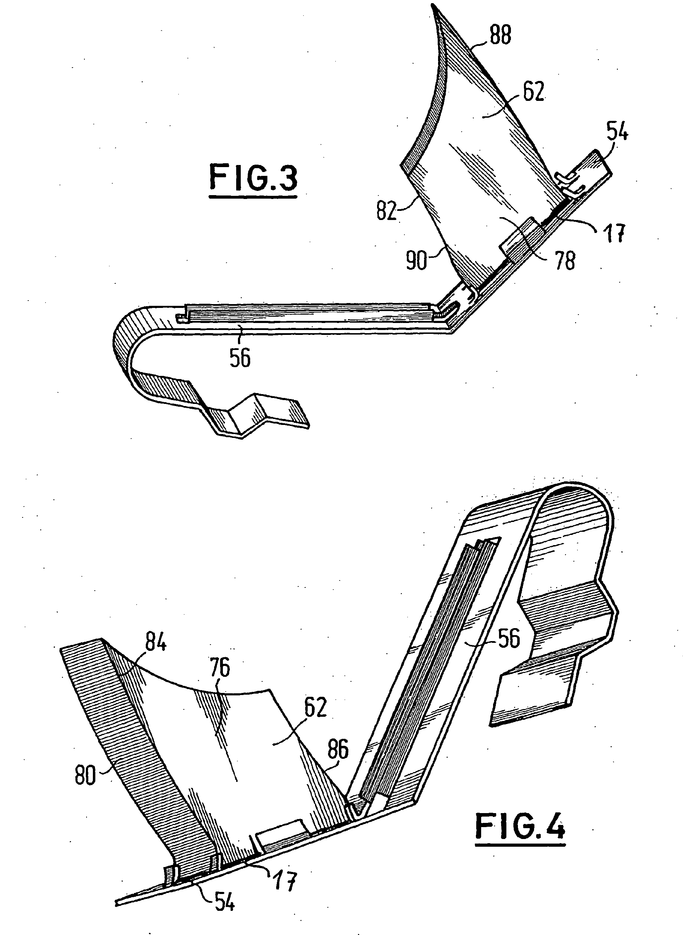

Der Trägerabschnitt 54 weist eine frei geschnittene Fläche 60 auf, auf der eine Kohlebürste wie die den Fig. 3 und 4 zu entnehmende Kohlebürste 62 mit ihrer Rückseitenfläche flächig aufliegt und mit diesem innig verbunden wie verlötet ist (Bereich 17). Zum Führen und gegebenenfalls zusätzlichen Fixieren der Kohlebürste 62 können Halte- oder Führungsabschnitte 64, 66, 68, 70, 72, 74 frei geschnitten und aus der von der Fläche 60 aufgespannten Ebene herausgebogen sein, die sich bei positionierter Kohlebürste 62 entlang deren Seitenaußenflächen 76, 78, 80, 82 erstrecken und gegebenenfalls die Kohlebürste 62 klemmend halten. Die Klemmfixierung ist jedoch kein zwingendes Merkmal, da die flächigen Halteabschnitte oder Fahnen 64, 66, 68, 70, 72, 74 im eigentlichen Sinne allein eine axiale Führung für die Kohlebürste 62 bieten müssen, die aufgrund der Federwirkung des Trägerabschnittes 54 die Kohlebürste 62 kraftbeaufschlagt auf einen Kommutator anlegt.

Wie insbesondere aus den Fig. 3 und 4 ersichtlich ist, erstrecken sich entlang der Schmalseiten 80, 62 der Kohlebürste 62 jeweils zwei Halte- bzw. Führungsabschnitte oder -fahnen 68, 70 bzw. 72, 74 und entlang der Breitseiten 76, 78 jeweils ein Halte- bzw. Führungsabschnitt bzw. eine Haltefahne 64, 66, die breiter als die an den Schmalseiten 80, 62 verlaufenden sind. Dabei geht von jeder Längskante 84, 86, 88, 90 der Kohlebürste 62 eine Haltefahne 68, 70, 72, 74 aus, wodurch zusammen mit den entlang verbleibender Längsseitenflächen 76, 78 der Kohlebürste 62 sich erstreckende Fahnen 64, 66 die Kohlebürste 62 so axial geführt ist, dass ein Drehen dieser ausgeschlossen ist. Somit ist eine zusätzliche Sicherung gegeben, sofern die innige Verbindung zwischen Kohlebürste 62 bzw. deren metallisiertem Bereich 17 und Trägerabschnitt 54 zerstört sein sollte.

Die Breitseiten 76, 78 der Kohlebürste 62 erstrecken sich im Ausführungsbeispiel entlang Längsachse des Trägerabschnitts 54.

Dadurch, dass die Kohlebürste 62 auf der von dem Trägerabschnitt 54 aufgespannten Ebene, nämlich der Trägerfläche 60 flächig aufliegt, ist auch bei auftretenden Schwingungen ein einwandfreies Anliegen der Kohlebürste 62 an einen Kommutator gewährleistet. Da zudem die Kohlebürste 62 den Trägerabschnitt 54 nicht durchsetzt, bedarf es einer geringen Einbautiefe.

Insbesondere ist bei der Verwendung von Blockkohlebürsten der Vorteil gegeben, dass die zur Herstellung der Kohlebürste erforderliche pressfertige Mischung in gewünschter Richtung in Bezug auf die Längsachse der Kohlebürste verpresst werden kann, also z. B. parallel zur Längsrichtung der fertigen Kohlebürste oder senkrecht zu dieser.

Das innige Verbinden durch Löten kann dadurch realisiert werden, dass die Kohlebürste mit ihrer Rückseite durch ein Zinnbad geführt wird, um anschließend mit der Halterung verbunden zu werden.

Auch besteht die Möglichkeit, eine innige bzw. kraftschlüssige Verbindung durch Verwenden eines elektrisch leitenden Klebers zwischen Kohlebürste und Halterung herzustellen.

## Patentansprüche

1. Halterung (20, 52) mit einer insbesondere an einem Kommutator (14) oder einem Schleifring mit einer Stirnfläche (36) anlegbaren Kohlebürste (16, 18, 62) umfassend ein gebogenes Federelement mit einem gegebenenfalls U- oder L-förmig gebogenen Befestigungsabschnitt (22, 56) und einem die Kohlebürste aufnehmenden Trägerabschnitt (24, 54) der Halterung, wobei die Kohlebürste mit dem Trägerabschnitt stoffschlüssig verbunden ist,
**dadurch gekennzeichnet,**
**dass** der Trägerabschnitt (24, 54) der Halterung (20, 52) eine die Kohlebürste (16, 62) rückseitenflächig abstützende frei geschnittene Abstützfläche (60) sowie aus dem Trägerabschnitt vorstehende, sich zumindest entlang zweier gegenüberliegender Seitenflächen (46, 48, 50) der Kohlebürste sich erstreckende Führungsabschnitte (40, 42, 44, 64, 66, 68, 70,72,74) aufweist, dass die Fühnmgsabschnitte (40, 42, 44, 64, 66, 68, 70 72, 74) aus dem Trägerabschnitt (24, 54) der Halterung (20, 52) frei geschnittene und aus von dem Trägerabschnitt aufgespannter Ebene herausgebogene Abschnitte sind und dass die Kohlebürste (16, 62) mit der Abstützfläche durch Löten oder Schweißen oder mittels elektrisch leitendem Kleber stoffschlüssig verbunden ist.

2. Halterung nach Anspruch 1,
**dadurch gekennzeichnet,**
**dass** die Kohlebürste (16, 62) trägerabschnittseitig metallisiert wie verzinnt, vernickelt und/oder verkupfert ist.

3. Halterung nach zumindest Anspruch 1,
**dadurch gekennzeichnet ,**
**dass** sich entlang jeder Seitenfläche (46, 48, 50, 76, 78, 80, 82) der Kohlebürste (16, 62) zumindest ein aus dem Trägerabschnitt (24, 54) der Halterung (20, 52) vorstehender Halte- bzw. Führungsabschnitt (40, 42, 44, 64, 66, 68, 70, 72, 74) erstreckt.

4. Halterung nach zumindest Anspruch 1,
**dadurch gekennzeichnet,**
**dass** sich entlang Schmalseiten (80, 82) der Kohlebürste (62) jeweils zwei Halte- bzw. Führungsabschnitte (68, 70; 72, 74) und entlang Breitseiten (76, 78) der Kohlebürste jeweils ein Halte- bzw. Führungsabschnitt (64, 66) erstrecken.

5. Halterung nach zumindest Anspruch 1,
**dadurch gekennzeichnet,**
**dass** von jeder Kante (86, 88, 90) der Kohlebürste (62) zumindest ein Halte- bzw. Führungsabschnitt (68, 70, 72, 74) ausgeht.

6. Halterung nach zumindest Anspruch 1,
**dadurch gekennzeichnet,**
**dass** die Halte- bzw. Führungsabschnitte (64, 66, 68, 70, 72, 74) die Kohlebürste (62) klemmend fixieren.

7. Halterung nach zumindest Anspruch 1,
**dadurch gekennzeichnet,**
**dass** die Kohlebürste eine Blockkohlebürste oder eine Hammerkohlebürste ist.

8. Halterung nach zumindest Anspruch 1,
**dadurch gekennzeichnet,**
**dass** die Kohlebürste senkrecht zu ihrer Längsachse gepresst ist

9. Halterung nach zumindest Anspruch 1,
**dadurch gekennzeichnet,**
**dass** die Kohlebürste parallel zu ihrer Längsachse gepresst ist.

## Claims

1. Holder (20, 52) for a carbon brush (16, 18, 62), particularly one which may be applied to a commutator (14) or a collector ring with a front area (36), comprising a bent spring element with a possibly U- or L-shaped fixing section (22, 56) and a support section (24, 54) for housing the carbon brush, whereby the carbon brush has a material connection to the support section,
**characterized in**
**that** the support section (24, 54) of the holder (20, 52) comprises a support surface (60) being freely cut out and supporting the carbon brush (16, 62) on the back, as well as guide sections (40, 42, 44, 64, 66, 68, 70, 72, 74) protruding from the support section and extending along at least two opposing lateral surfaces (46, 48, 50) of the carbon brush, that the guide sections (40, 42, 44, 64, 66, 68, 70, 72, 74) are sections that are freely cut out from the support section (24, 54) of the holder (20, 52) and are bent out from the plane defined by the support section, and that the carbon brush (16, 62) has a material connection with the support surface by soldering or welding or by means of an electrically conductive adhesive.

2. Holder according to claim 1,
**characterized in**
**that** the carbon brush (16, 62) on the support section side is metal-coated such as tin-, nickel, and/or copper plated.

3. Holder according to at least claim 1,
**characterized in**
**that** at least one retention or guide section (40, 42, 44, 64, 66, 68, 70, 72, 74) protruding from the support section (24, 54) of the holder (20, 52) extends along each lateral surface (46, 48, 50, 76, 78, 80, 82) of the carbon brush (16, 62).

4. Holder according to at least claim 1,
**characterized in**
**that** in each case two retention or guide sections (68, 70; 72, 74) extend along narrow sides (80, 82) of the carbon brush (62), and one retention or guide section (64, 66) extends in each case along the wide sides (76, 78) of the carbon brush.

5. Holder according to at least claim 1,
**characterized in**
**that** at least one retention or guide section (68, 70, 72, 74) extends from each edge (86, 88, 90) of the carbon brush (62).

6. Holder according to at least claim 1,
**characterized in**
**that** the retention or guide sections (64, 66, 68, 70, 72, 74) fix the carbon brush (62) in a clamping fashion.

7. Holder according to at least claim 1,
**characterized in**
**that** the carbon brush is a block carbon brush or hammer carbon brush.

8. Holder according to at least claim 1,
**characterized in**
**that** the carbon brush is pressed perpendicular to its longitudinal axis.

9. Holder according to at least claim 1,
**characterized in**
**that** the carbon brush is pressed parallel to its longitudinal axis.

## Revendications

1. Dispositif de fixation (20, 52) avec un balai de charbon (16, 18, 62), en particulier un balai pouvant être mis en contact avec un commutateur (14) ou une bague collectrice avec une face frontale (36), comprenant un élément élastique courbé avec une section de fixation (22, 56) courbée présentant le cas échéant une forme en U ou en L et une section portante (24, 54) du dispositif de fixation logeant le balai de charbon, sachant que ce dernier est relié par liaison de matière à la section portante,
**caractérisé en ce**
**que** la section portante (24, 54) du dispositif de fixation (20, 52) présente une surface d'appui (60) soutenant le balai de charbon (16, 62) du côté de la surface arrière, ainsi que des sections de guidage (40, 42, 44, 64, 66, 68, 70, 72, 74) faisant saillie à partir de la section portante et s'étendant au moins le long de deux surfaces latérales opposées (46, 48, 50) du balai de charbon, que les sections de guidage (40, 42, 44, 64, 66, 68, 70, 72, 74) sont des sections découpées dans la section portante (24, 54) du dispositif de fixation (20, 52) et ressortant de manière courbée du plan formé par la section portante, et que le balai de charbon (16, 62) est relié par liaison de matière à la surface d'appui, par brasage ou soudage ou à l'aide d'une colle conduisant l'électricité.

2. Dispositif de fixation selon la revendication 1,
**caractérisé en ce**
**que** le balai de charbon (16, 62) est métallisé du côté de la section portante, par exemple étamé, nickelé et/ou cuivré.

3. Dispositif de fixation selon au moins la revendication 1,
**caractérisé en ce**
**qu'**au moins une section de fixation ou de guidage (40, 42, 44, 64, 66, 68, 70, 72, 74) dépassant de la section portante (24, 54) du dispositif de fixation (20, 52) s'étend le long de chaque surface latérale (46, 48, 50, 76, 78, 80, 82) du balai de charbon (16, 62).

4. Dispositif de fixation selon au moins la revendication 1,
**caractérisé en ce**
**que** s'étendent respectivement deux sections de fixation ou de guidage (68, 70 ; 72, 74) le long des petits côtés (80, 82) du balai de charbon (62) et respectivement une section de fixation ou de guidage (64, 66) le long des grands côtés (76, 78).

5. Dispositif de fixation selon au moins la revendication 1,
**caractérisé en ce**
**qu'**au moins une section de fixation ou de guidage (68, 70, 72, 74) part de chacun des bords (86, 88, 90) du balai de charbon (62).

6. Dispositif de fixation selon au moins la revendication 1,
**caractérisé en ce**
**que** les sections de fixation ou de guidage (64, 66, 68, 70, 72, 74) maintiennent le balai de charbon (62) par serrage.

7. Dispositif de fixation selon au moins la revendication 1,
**caractérisé en ce**
**que** le balai de charbon est un balai à bloc ou un balai à marteau.

8. Dispositif de fixation selon au moins la revendication 1,
**caractérisé en ce**
**que** le balai de charbon est pressé verticalement par rapport à son axe longitudinal.

9. Dispositif de fixation selon au moins la revendication 1,
**caractérisé en ce**
**que** le balai de charbon est pressé parallèlement à son axe longitudinal.
